**Europäisches Patentamt**

**European Patent Office**

**Office européen des brevets**

(19)

(11) Veröffentlichungsnummer: **0 165 325**
**B1**

(12) **EUROPÄISCHE PATENTSCHRIFT**

(45) Veröffentlichungstag der Patentschrift:
24.08.88

(51) Int. Cl.⁴: **G 01 J 1/42**

(21) Anmeldenummer: **84106945.3**

(22) Anmeldetag: **18.06.84**

(54) Verfahren und Einrichtung zur akustischen Kontrolle von Justiervorgängen an optischen Vorrichtungen.

(43) Veröffentlichungstag der Anmeldung:
**27.12.85 Patentblatt 85/52**

(45) Bekanntmachung des Hinweises auf die Patenterteilung:
**24.08.88 Patentblatt 88/34**

(84) Benannte Vertragsstaaten:
**AT BE CH DE FR GB IT LI NL SE**

(56) Entgegenhaltungen:
**DE - A - 2 850 743**
**DE - A - 3 151 834**
**US - A - 4 081 216**
**US - A - 4 126 834**

**APPLIED OPTICS, Band 18, Nr. 17, 1 September 1979;H.P. LAYER "Acoustooptic modulator intensity servo", Seiten 2947-2949**

(73) Patentinhaber: **DR.-ING. RUDOLF HELL GmbH, Grenzstrasse 1-5, D-2300 Kiel 14 (DE)**

(72) Erfinder: **Schulz-Hennig, Jörg, Gartenweg 7, D-2305 Heikendorf (DE)**
Erfinder: **Sievers, Horst, Buschstrasse 2, D-2308 Preetz (DE)**

ACTORUM AG

# Beschreibung

Die vorliegende Erfindung bezieht sich auf die Gebiete der abbildenden Optik und der Laser-Optik und betrifft optische Vorrichtungen, bei denen die Intensitätsverteilung in einem Lichtbündel, insbesondere in einem Laser-Lichtbündel, bezüglich einer im Strahlengang befindlichen Bezugsebene quer zur optischen Achse des Lichtbündels justiert werden muss.

Die Intensitätsverteilung, die Lage oder die Richtung eines Lichtbündels wird durch optische Komponenten, wie Spiegel, Umlenkprismen, Linsen, optisch transparente Plan- und Keilplatten, Strichgitter, holografische Ablenkerblenden, akustische Multifrequenz-Modulatoren oder akustooptische Reflektoren beeinflusst. Schliesslich kann auch die Lichtquelle selbst bewegt werden. Die Justierung eines Lichtbündels bezüglich seiner Intensitätsverteilung, seiner Lage oder seiner Richtung erfolgt durch geeignete Justiermittel in Form von mechanischen Verstellungen wie z.B. Spiegelhalterungen oder in Form von elektromechanischen Verstellungen wie z.B. Piezoantrieben.

Zur Kontrolle der Justierung eines Lichtbündels ist es bekannt, während des Justiervorganges Lehren, wie Zielscheiben, Schirme oder Lochblenden, zu beobachten oder die Signale von geeigneten Fotodetektoren z.B. auf einem Oszillographen sichtbar zu machen.

Die bekannten Justierhilfen sind in vielen Fällen aber nicht genau genug, liefern manchmal keine eindeutige Aussage über eine optimale Justierung und sind gelegentlich auch schwer zu handhaben. Hinzu kommt, dass es beispielsweise aufgrund der exponierten Lage eines Justiermittels oder der kompakten Bauweise einer optischen Vorrichtung oftmals nicht möglich ist, beim Justiervorgang gleichzeitig eine genaue Beobachtung oder Kontrolle der erfolgten Justierung vorzunehmen.

Der vorliegenden Erfindung liegt daher die Aufgabe zugrunde, ein Verfahren und eine Einrichtung zur akustischen Kontrolle der Intensitätsverteilung in einem Lichtbündel bezüglich einer im Strahlengang befindlichen Bezugsebene quer zur optischen Achse des Lichtbündels anzugeben, mit deren Hilfe die Justierung leichter und genauer durchzuführen ist und mit denen ausserdem die erforderlichen Schritte für eine optimale Justierung nach Grösse und Richtung signalisiert werden.

Diese Aufgabe wird bezüglich des Verfahrens durch die Merkmale des Anspruchs 1 und bezüglich der Einrichtung durch die Merkmale des Anspruchs 10 gelöst. Vorteilhafte Weiterbildungen sind in den abhängigen Ansprüchen angegeben.

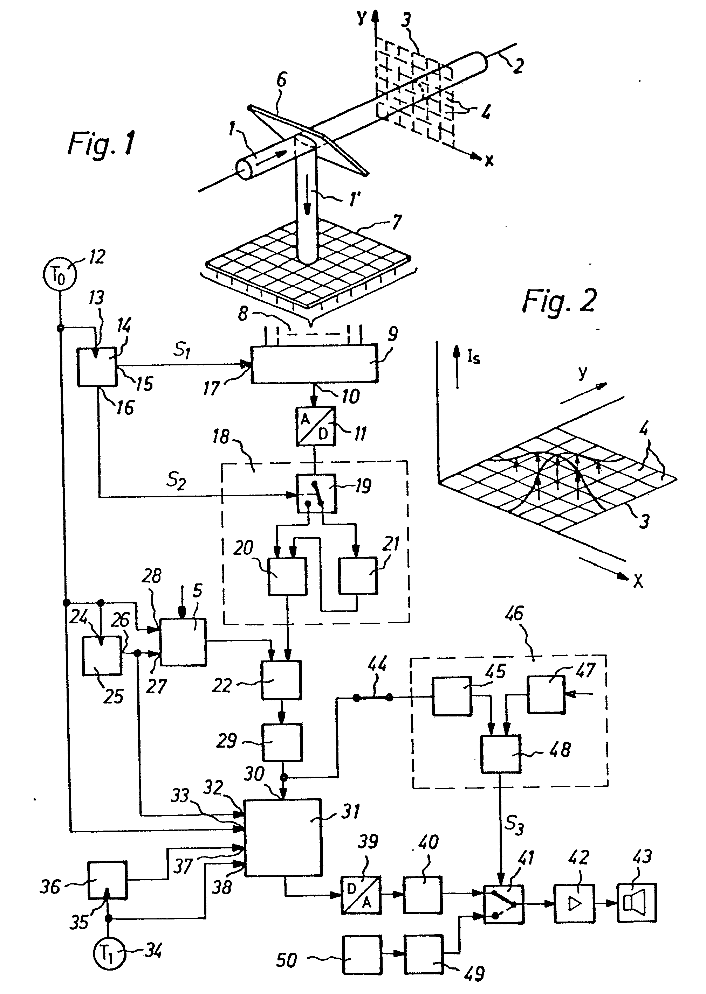

Die Erfindung wird im folgenden anhand der Fig. 1 und 2 näher erläutert. Es zeigen:

Fig. 1 ein Ausführungsbeispiel für eine Einrichtung zur akustischen Kontrolle einer Lichtbündel-Justierung bezüglich seiner Intensitätsverteilung in einer vorgegebenen Bezugsebene; und

Fig. 2 eine grafische Darstellung einer gewünschten Intensitätsverteilung in der Bezugsebene.

Fig. 1 zeigt ein Ausführungsbeispiel einer Einrichtung zur akustischen Überwachung oder Kontrolle der Justierung eines Lichtbündels, z.B. eines Laser-Lichtbündels, bezüglich seiner Intensitätsverteilung in einer vorgegebenen Bezugsebene quer zur optischen Achse des Lichtbündels.

Ein Lichtbündel 1, dessen Lichtquelle und Justiermittel nicht dargestellt sind, soll in einer vorgegebenen, quer zur optischen Achse 2 des Lichtbündels 1 liegenden Bezugsebene 3 eine bestimmte ortsabhängige Intensitätsverteilung $I_2 = f(x,y)$ aufweisen. Ein Beispiel für eine gewünschte Intensitätsverteilung in der Bezugsebene 3 zeigt Fig. 2, in der als räumliche Funktion die Soll-Intensitätswerte $T_2$ für die einzelnen, durch Koordinatenwerte x und v definierten Flächenelemente 4 der Ebene 3 dargestellt sind. Die für die gewünschte Intensitätsverteilung erforderlichen Soll-Intensitätswerte $\bar{I}_s = f(x,v)$ sind in normierter Form in einem Sollwert-Speicher 5 der Kontroll-Einrichtung für die einzelnen Flächenelemente 4 der Bezugsebene 3 abrufbar gespeichert.

Eine Änderung der Intensitätsverteilung im Strahlenbündel 1 kann beispielsweise durch Verschieben von Linsen oder Prismen im Strahlengang des Lichtbündels 1 erreicht werden.

Zur Messung der jeweils vorhandenen Intensitätsverteilung $I_i = f(x,y)$ vor Beginn oder während des Justiervorganges befindet sich im Strahlengang des Lichtbündels 1 ein teildurchlässiger Planspiegel 6 (Strahlteiler), mit dem ein Teillichtbündel 1' ausgespiegelt und auf eine Licht-Messfläche 7 der Kontroll-Einrichtung geworfen wird. Die Licht-Messfläche 7 und die Bezugsfläche 3 haben denselben Abstand zum Planspiegel 6. Die Licht-Messfläche 7 ist z.B. eine Fotodioden-Matrix mit n flächenhaft angeordneten Fotodioden, wobei jedem Flächenelement 4 innerhalb der Bezugsebene 3 eine lagemässig innerhalb der Fotodioden-Matrix übereinstimmende Fotodiode zugeordnet ist, so dass die einzelnen Ausgangssignale der Fotodioden den gemessenen, ortsabhängigen Ist-Intensitätswerten $I_i = f(x,v)$ für die Flächenelemente 4 der Bezugsebene 3 entsprechen. Die Licht-Messfläche 7 kann selbstverständlich auch im Strahlengang des Lichtbündels 1 angeordnet sein.

Die in der Licht-Messfläche 7 gemessenen n Ist-Intensitätswerte $I_i$ werden an die Eingänge 8 eines Analog-Multiplexers 9 gegeben, welcher die einzelnen Ist-Intensitätswerte $I_i$ nacheinander in zyklischer Folge über seinen Ausgang 10 zu einem nachgeschalteten A/D-Wandler 11 durchschaltet.

Zur Steuerung des Analog-Multiplexers 9 erzeugt ein Taktgeber 12 eine Taktfolge $T_0$, die über einen Takt-Eingang 13 in einen schnellen zyklischen Zähler 14 eingezählt wird. Am Daten-Ausgang 15 des schnellen zyklischen Zählers 14 entsteht ein digitales Steuersignal $S_1$ mit n verschie-

denen Bit-Kombinationen, die sich jeweils nach n eingezählten Takten der Taktfolge $T_0$ in den einzelnen Messzyklen wiederholen. Gleichzeitig entsteht an einem Signalausgang 16 des Zählers 14 jeweils am Ende eines Messzyklus' ein Steuersignal $S_2$ «Messzyklus-Ende». Das digitale Steuersignal $S_1$ wird zum Durchschalten der gemessenen Ist-Intensitätswerte $I_i$ in den einzelnen Messzyklen auf einen Steuer-Eingang 17 des Analog-Multiplexers 9 gegeben, wobei mit jeder Bit-Kombination des Steuersignals $S_1$ der Ist-Intensitätswert $I_i$ eines bestimmten Flächenelementes 4 der Bezugsebene 3 zu dem A/D-Wandler 11 durchgeschaltet wird.

Die in dem A/D-Wandler 11 digitalisierten Ist-Intensitätswerte $I_i$ der einzelnen Flächenelemente 4 werden im dargestellten Ausführungsbeispiel in einer Normierungs-Stufe 18 normiert, da in den meisten Fällen nicht die absolute, sondern die relative Intensitätsverteilung interessiert. Die Normierungs-Stufe 18 besteht aus einem durch einen mechanischen Schalter symbolisierten elektronischen Umschalter 19, einer Addier-Stufe 20 mit Addierwerk und Zwischensummen-Speicher und einer Dividier-Stufe 21. Der elektrische Umschalter 19 wird jeweils am Ende eines Messzyklus durch das im Zähler 14 erzeugte Steuersignal $S_2$ «Messzyklus-Ende» umgeschaltet. Dadurch werden beispielsweise in jedem geradzahligen Messzyklus die einzelnen Ist-Intensitätswerte $T_i$ auf die Addier-Stufe 20 gegeben, im Addierwerk aufaddiert, der Summenwert $\sum I_i$ in dem internen Register abgelegt und der Zwischensummenspeicher des Addierwerkes rückgesetzt, während in jedem ungeradzahligen Messzyklus die normierten Ist-Intensitätswerte $\bar{I}_i$ in der Dividier-Stufe 21 durch Division der einzelnen Ist-Intensitätswerte $I_i$ durch den gespeicherten Summenwert $\sum I_i$ gebildet werden. Die normierten Ist-Intensitätswerte $\bar{I}_i$ werden für jedes Flächenelement 4 nacheinander ausgegeben und einer Differenz-Stufe 22 zugeführt. Dabei ist die Frequenz der in den Zähler 14 eingezählten Taktfolge $T_0$ so gross gewählt, dass sich die gemessenen Intensitätswerte $I_i$ von zwei aufeinanderfolgenden Messzyklen während des Justiervorganges des Lichtbündels 1 nur geringfügig ändern.

Die im Taktgeber 12 gewonnene Taktfolge $T_0$ wird gleichzeitig über einen Takt-Eingang 24 in einen Adress-Zähler 25 eingezählt. Der Adress-Zähler 25 ist so eingestellt, dass er nur in jedem geradzahligen Messzyklus über seinen Adress-Ausgang 26 und über den Adress-Eingang 27 des Sollwert-Speichers 5 die entsprechenden Adressen für die einzelnen normierten Soll-Intensitätswerte $\bar{I}_s$ aufruft, wobei die an den Lesebefehl-Eingang 28 des Sollwert-Speichers 5 herangeführte Taktfolge $T_0$ als Lese-Taktfolge verwendet wird.

Auf diese Weise werden synchron mit der Bildung der normierten Ist-Intensitätswerte $\bar{I}_i$ für die einzelnen Flächenelemente 4 innerhalb der ungeraden Messzyklen die den betreffenden Flächenelementen 4 zugeordneten normierten Soll-Intensitätswerte $\bar{I}_2$ aus dem Sollwert-Speicher 5 ausgelesen und für die einzelnen Flächenelemente 4 der Bezugsebene 3 die Intensitätsabweichungen, im Ausführungsbeispiel die Intensitäts-Differenzwerte $\Delta\bar{I} = f(x,y)$ zwischen Soll- und Ist-Intensitätswerten festgestellt.

Dazu ist der Sollwert-Speicher 5 und die Normierungs-Stufe 18 mit einer Differenz-Stufe 22 verbunden, in der die Intensitäts-Differenzwerte $\Delta\bar{I}$ gebildet werden. Die Intensitäts-Differenzwerte $\Delta\bar{I}$ werden in vorteilhafter Weise nach einer Funktion modifiziert, im Ausführungsbeispiel in einer nachgeschalteten Quadrier-Stufe 29 quadriert, wodurch das Vorzeichen der Differenzwerte eliminiert und die Bewertung der Abweichungen günstiger wird.

Die quadrierten Differenzwerte $(\Delta\bar{I})^2$ werden über einen Daten-Eingang 30 in einen Puffer-Speicher 31 eingeschrieben und dort zwischengespeichert. Zum Einschreiben der quadrierten Differenzwerte $(\Delta\bar{I})^2$ ruft der Adress-Zähler 25 gleichzeitig die Adressen des Puffer-Speichers 31 über den Schreibadress-Eingang 32 auf, während die Taktfolge $T_0$ als Schreib-Taktfolge an den Schreibbefehl-Eingang 33 des Puffer-Speichers 31 gegeben wird.

Die in dem Puffer-Speicher 31 zwischengespeicherten quadratischen Differenzwerte $(\Delta\bar{I})^2$ werden in langsamen Zyklen, z.B. mit einer Zykluszeit von einer Sekunde, aus dem Puffer-Speicher 31 ausgelesen. Hierzu erzeugt ein Taktgeber 34 eine Taktfolge $T_1$, die auf den Takt-Eingang 35 eines langsamen zyklischen Adress-Zählers 36 gegeben wird. Der Adress Zähler 36 erzeugt die Lese-Adressen, welche dem Leseadress-Eingang 37 des Puffer-Speichers 31 zugeführt werden. Die als Lese-Taktfolge verwendete Taktfolge $T_1$ wird dem Puffer Speicher 31 über den Lesebefehl-Eingang 38 zugeführt.

Die ausgelesenen digitalen quadratischen Intensitäts-Differenzwerte $(\Delta\bar{I})^2$ werden in einem nachgeschalteten D/A-Wandler 39 in analoge Spannungswerte umgewandelt, welche ein Mass für die quadratischen Abweichungen der Ist-Intensitätsverteilung von der Soll-Intensitätsverteilung darstellen.

In einem nächsten Verfahrensschritt wird eine periodische Schwingung erzeugt, deren Frequenz, Amplitude, Tastfrequenz oder Tastverhältnis von den quadratischen Intensitäts-Differenzwerten $(\Delta\bar{I})^2$ modifiziert wird. Dann wird die modifizierte Schwingung in einen entsprechenden Messton umgesetzt, dessen Tonhöhe, Lautstärke, Unterbrecherfrequenz oder Unterbrechungsdauer von den jeweiligen quadratischen Intensitäts-Differenzwerten $(\Delta\bar{I})^2$ abhängen. Im gewählten Ausführungsbeispiel wird in Abhängigkeit der festgestellten quadratischen Intensitäts-Differenzwerte $(\Delta\bar{I})^2$ die Frequenz der Schwingung und damit die Tonhöhe des Messtons variiert. Dazu ist ein spannungsgesteuerter Oszillator 40 (VCO) vorgesehen, dem die quadratischen Intensitäts-Differenzwerte $(\Delta\bar{I})^2$ als Steuersignal zugeführt werden. Der spannungsgesteuerte Oszillator 40 erzeugt eine sinusförmige Ausgangsschwingung, deren Frequenz von dem eingespeisten Steuersignal abhängt. Die Ausgangsschwingung des spannungsgesteuerten Oszillators 40 wird über einen wiederum als mechanischen Umschalter symbolisierten elektronischen Umschalter 41 an einen Verstärker 42 gegeben, dort verstärkt und mittels eines elektroakustischen Wandlers z.B. in Form eines Lautsprechers 43 als Messton hörbar gemacht. Der Zusammenhang zwischen den quadratischen Intensitäts-Differenzwerten $(\Delta\bar{I})^2$ und der Tonhöhe ist beispielsweise dabei so getroffen, dass die Höhe des Messtons mit kleiner werdenden quadratischen Intensitäts-Differenzwerten absinkt. Da die einzelnen quadratischen Intensitäts-Differenzwerte $(\Delta\bar{I})^2$ beispielsweise in Sekundenabstand aus dem Puffer-Speicher 31 ausgelesen werden, werden auch die einzelnen Messströme für die Flächenelemente 4 der Bezugsebene 3 in einem Sekundenabstand erzeugt. Bei der akustischen Überwachung der Justierung des Lichtbündels 1 wird somit bei einem Flächenelement 4 mit einer grossen Intensitätsabweichung ein hoher Messton und bei einem Flächenelement 4 mit geringer Intensitätsabweichung ein tiefer Messton erzeugt, wobei mit zunehmender Intensitäts-Übereinstimmung für alle Flächenelemente 4 die tiefen Messtöne überwiegen.

Da in den meisten Fällen keine Justierung auf den Intensitäts-Differenzwert Null erforderlich ist, sondern lediglich eine gewisse Übereinstimmung zwischen Soll- und Ist-Intensitätsverteilung innerhalb vorgegebener Grenzwerten angestrebt wird, werden die in der Quadrier-Stufe 29 gewonnenen quadratischen Intensitäts-Differenzwerte $(\Delta\bar{I})^2$ gleichzeitig über einen Schalter 44 auf eine Addier-Stufe 45 einer Schwellen-Schaltung 46 gegeben. In der Addier-Stufe 45 werden jeweils durch Aufaddition der quadratischen Intensitäts-Differenzwerte $(\Delta\bar{I})^2$ eines Messzyklus ein Summenwert $\Sigma (\Delta\bar{I})^2$ gebildet und in einem internen Register der Addier-Stufe 45 abgelegt. In ein Register 47 der Schwellen-Schaltung 46 wird ein normierter Grenzwert $T_g$ geladen, welcher eine zulässige Abweichung der Ist-Intensitätsverteilung von der angestrebten Soll-Intensitätsverteilung repräsentiert. In einem Vergleicher 48 werden die Summenwerte $\Sigma (\Delta\bar{I})^2$ mit dem vorgegebenen Grenzwert $I_g$ verglichen. Unterschreitet der Summenwert $\Sigma (\Delta\bar{I})^2$ den vorgegebenen Grenzwert $T_g$, gibt der Vergleicher 48 ein Steuersignal $S_3$ ab, welches den Umschalter 41 in die gestrichelt dargestellte Position umschaltet. In diesem Falle wird die Verbindung zwischen dem spannungsgesteuerten Oszillator 40 und dem Lautsprecher 43 unterbrochen und der vom quadratischen Differenzwert abhängige Messton abgeschaltet. Statt dessen wird der Lautsprecher 43 über den Umschalter 41 und einen Unterbrecher 49 mit einem Oszillator 50 verbunden. Der Oszillator 50 erzeugt eine Schwingung von z.B. 500 Hz, die von dem Unterbrecher 49 periodisch mit beispielsweise einer Frequenz von 5 HZ unterbrochen und im Lautsprecher 43 als periodisch unterbrochener Dauer-Messton hörbar gemacht wird. Dieser periodisch unterbrochene Dauer-Messton signalisiert, dass die gewünschte Übereinstimmung von Soll- und Ist-Intensitätsverteilung erreicht ist. Falls eine genauere als die durch den momentanen in das Register 47 eingegebenen Grenzwert $T_g$ vorgegebenen Justierung gewünscht wird, lässt sich ein entsprechend kleinerer Grenzwert $T_g$ in das Register 47 laden. Die Justierung mit Hilfe dieser Grenzwerte hat den Vorteil, dass sie vom Hersteller oder Anwender solcher optischen Vorrichtungen vorgegeben werden kann.

Falls eine Justierung des Lichtbündels 1 bis zur vollständigen Übereinstimmung erwünscht ist, lässt sich die Schwellen-Schaltung 46 in vorteilhafter Weise durch Betätigen des Schalters 44 ausser Betrieb setzen, so dass der Umschalter 41 in der dargestellten Position verbleibt. In diesem Falle ist der erzeugte Messton weiterhin von den quadratischen Differenzwerten $(\Delta\bar{I})^2$ abhängig, wobei der Lautsprecher 43 bei erreichter Übereinstimmung zwischen Soll- und Ist-Intensitätsverteilung einen tiefen Dauer-Messton abgibt. Die Art der Messton-Erzeugung ist nicht auf das beschriebene Ausführungsbeispiel beschränkt.

Sollte statt der relativen doch die absolute Intensitätsverteilung von Interesse sein, wird die Normierungs-Stufe 18 überbrückt oder entfällt ganz, so dass der Ausgang des A/D-Wandlers 11 direkt mit einem Eingang der Differenz-Stufe 22 verbunden ist. Dann wird der Sollwert-Speicher 5 und das Register 47 nicht mit den normierten, sondern mit den absoluten Sollwerten bzw. Grenzwerten geladen. Mit Hilfe der beschriebenen Kontroll-Einrichtung lässt sich auch in vorteilhafter Weise eine Lage-Justierung des Lichtbündels 1 vornehmen, indem etwa nur denjenigen Flächenelementen 4 der Bezugsebene 3 ein Soll-Intensitätswert $I_s$ zugeordnet wird, welche die Querschnittsfläche des Lichtbündels 1 in der gewünschten Lage bilden. Alternativ dazu können zur Lage-Justierung des Lichtbündels 1 auch andere Untermengen der Flächenelemente 4 in bestimmter Reihenfolge abgefragt werden.

**Patentansprüche**

1. Verfahren zur akustischen Kontrolle der Justierung eines Lichtbündels bezüglich seiner Intensitätsverteilung in einer Bezugsebene quer zur optischen Achse des Lichtbündels, dadurch gekennzeichnet, dass

a) die Bezugsebene (3) in Flächenelemente (4) unterteilt ist und für jedes Flächenelement (4) ein gewünschter Intensitätswert ($I_s$) vorgegeben und festgehalten wird,

b) die bei der Justierung jeweils vorhandenen Intensitätswerte ($I_i$) des Lichtbündels (1) in den einzelnen Flächenelementen (4) in schneller zyklischer Folge gemessen werden,

c) für die einzelnen Flächenelemente (4) die Intensitätsabweichungen ($\Delta\bar{I}$) zwischen gewünschten und vorhandenen Intensitätswerten festgestellt und zwischengespeichert werden,

d) die Intensitätsabweichungen ($\Delta\bar{I}$) nacheinander in langsamer zyklischer Folge ausgelesen werden, und

e) eine Schwingung erzeugt, mindestens ein Parameter der Schwingung in Abhängigkeit der jeweiligen Intensitätsabweichung (ΔĪ) in den einzelnen Flächenelementen (4) modifiziert und die modifizierte Schwingung als entsprechender Messton für jedes Flächenelement (4) der Bezugsebene (3) hörbar gemacht wird.

2. Verfahren nach Anspruch 1, dadurch gekennzeichnet, dass als Parameter die Frequenz, die Amplitude, die Tastfrequenz oder das Tastverhältnis der Schwingung in Abhängigkeit der Intensitätsabweichungen (ΔĪ) modifiziert und dadurch die Tonhöhe, die Lautstärke, die Unterbrecherfrequenz oder die Unterbrechungsdauer des Messtons geändert wird.

3. Verfahren nach Anspruch 1 oder 2, dadurch gekennzeichnet, dass die Intensitätsabweichungen (ΔĪ) als Intensitäts-Differenzwerte festgestellt werden.

4. Verfahren nach einem der Ansprüche 1 – 3, dadurch gekennzeichnet, dass die festgestellten Intensitäts-Differenzwerte nach einer vorgegebenen Funktion modifiziert werden.

5. Verfahren nach einem der Ansprüche 1 – 4, dadurch gekennzeichnet, dass
a) die festgestellten oder modifizierten Intensitätsabweichungen (ΔĪ) in den einzelnen Flächenelementen (4) der Bezugsebene (3) mit einem vorgegebenen Grenzwert ($I_g$) verglichen werden, welcher eine erlaubte Abweichung von der gewünschten Intensitätsverteilung repräsentiert, und
b) das Unterschreiten des vorgegebenen Grenzwertes ($I_g$) durch sämtliche Intensitätsabweichungen (ΔĪ) in den Flächenelementen (4) als Messton hörbar gemacht wird.

6. Verfahren nach einem der Ansprüche 1–4, dadurch gekennzeichnet, dass
a) in jedem Messzyklus die Summe aller Intensitätsabweichungen (ΣΔĪ) gebildet und der Summenwert (ΣΔĪ) mit einem vorgegebenen Grenzwert ($I_g$) verglichen wird, welcher eine erlaubte Abweichung von der gewünschten Intensitätsverteilung repräsentiert, und
b) das Unterschreiten des vorgegebenen Grenzwertes ($I_g$) durch den Summenwert (ΣΔĪ) als Messton hörbar gemacht wird.

7. Verfahren nach Anspruch 5 oder 6, dadurch gekennzeichnet, dass bei Unterschreiten des Grenzwertes der von den Intensitätsabweichungen (ΔĪ) abhängige Messton abgeschaltet wird.

8. Verfahren nach einem der Ansprüche 1–7, dadurch gekennzeichnet, dass
a) gewünschte Intensitätswerte ($I_s$) und der Grenzwert ($I_g$) als nominierte Werte vorgegeben werden, und
b) die gemessenen Intensitätswerte ($I_i$) normiert werden.

9. Verfahren nach einem der Ansprüche 1–8, dadurch gekennzeichnet, dass zur Messung der vorhandenen Intensitätswerte ($I_i$) ein Teillichtbündel (I') aus dem Lichtbündel (I) ausgespiegelt wird.

10. Einrichtung zur akustischen Kontrolle der Justierung eines Lichtbündels bezüglich seiner Intensitäts-Verteilung in einer in Flächenelemente unterteilte Bezugsebene quer zur optischen Achse des Lichtbündels, gekennzeichnet durch

a) eine optoelektronische Messanordnung (7) zur Messung der vorhandenen Intensitätswerte ($I_i$) in den Flächenelementen der Bezugsebene,
b) einen an die Messordnung (7) angeschlossenen Multiplexer (9) zum zyklischen, aufeinanderfolgenden Durchschalten der gemessenen Intensitätswerte ($I_i$),
c) einen mit dem Multiplexer (9) verbundenen A/D-Wandler (11) zur Digitalisierung der Intensitätswerte ($I_i$),
d) einen Sollwert-Speicher (5) zur Ablage vorgegebener Intensitätswerte ($I_s$) für die einzelnen Flächenelemente der Bezugsebene,
e) eine an den Sollwert-Speicher (5) und den A/D-Wandler (11) angeschlossene Stufe (22) zur Feststellung der Intensitätsabweichungen (ΔĪ) zwischen den vorgegebenen und den gemessenen Intensitätswerten ($I_s$; $I_i$) für die einzelnen Flächenelemente,
f) einen mit der Stufe (22) verbundenen Puffer-Speicher (31) zur Zwischenspeicherung der festgestellten Intensitätsabweichungen (ΔĪ),
g) einen mit dem Puffer-Speicher (31) in Verbindung stehenden D/A-Wandler (39) zur Bildung analoger Intensitätsabweichungen (ΔĪ),
h) einen an den D/A-Wandler (39) angeschlossenen und von den Intensitätsabweichungen (ΔĪ) gesteuerten Schwingungs-Generator (40, 42) zur Erzeugung einer Schwingung, von der mindestens ein Parameter in Abhängigkeit der Intensitätsabweichungen (ΔĪ) modifiziert wird,
i) einen an den Schwingungs-Generator (40, 42) angeschlossenen elektroakustischen Wandler (43) zur Umsetzung der modifizierten Schwingung in einen Messton,
k) einen mit dem Multiplexer (9), dem Sollwert-Speicher (5) und dem Puffer-Speicher (31) verbundenen ersten Steuer-Generator (12, 14, 25) zum Durchschalten der gemessenen Intensitätswerte ($I_i$), zum Auslesen der gewünschten Intensitätswerte ($I_s$) aus dem Sollwert-Speicher (5) und zum Einschreiben der festgestellten Intensitätsabweichungen (ΔĪ) in den Puffer-Speicher (31), und durch
l) einen an den Puffer-Speicher (31) angeschlossenen zweiten Steuer-Generator (34, 36) zum Auslesen der zwischengespeicherten Intensitätsabweichungen (ΔĪ).

11. Einrichtung nach Anspruch 10, dadurch gekennzeichnet, dass der Schwingungs-Generator (40, 42) einen spannungsgesteuerten Oszillator (40) aufweist, mit dem die Frequenz der erzeugten Schwingung in Abhängigkeit der Intensitätsabweichungen (ΔĪ) modifiziert wird.

12. Einrichtung nach Anspruch 10 oder 11, dadurch gekennzeichnet, dass die Stufe (22) als Differenz-Stufe ausgebildet ist.

13. Einrichtung nach einem der Ansprüche 10–12, dadurch gekennzeichnet, dass zwischen der Stufe (22) und dem Puffer-Speicher (31) eine Stufe (29) zur Modifizierung der Intensitätsab-

weichungen ($\Delta$I) nach einer vorgegebenen Funktion geschaltet ist.

14. Einrichtung nach einem der Ansprüche 10-13, dadurch gekennzeichnet, dass zwischen dem A/D-Wandler (11) und der Stufe (22) eine Normierungs-Stufe (18) angeordnet ist zur Normierung der gemessenen Intensitätswerte ($I_i$).

15. Einrichtung nach einem der Ansprüche 10-14, dadurch gekennzeichnet, dass
a) eine mit der Stufe (22) bzw. der Stufe (29) und dem Schwingungs-Generator (40; 42) verbundene Schwellenschaltung (46) vorgesehen ist, zur Erzeugung eines Steuersignals ($S_3$) bei Unterschreiten eines vorgegebenen Grenzwertes ($I_g$) durch die Intensitätsabweichungen ($\Delta$I), und
b) der Schwingungs-Generator (40, 42) zusätzlich Mittel (49, 50) zur Erzeugung einer zweiten Schwingung und durch das Steuersignal ($S_3$) betätigbare Schaltmittel (41) zum Durchschalten der zweiten Schwingung an den elektroakustischen Wandler (43) aufweist, wodurch beim Unterschreiten des Grenzwertes ein zweiter Messton hörbar wird.

16. Einrichtung nach Anspruch 15, dadurch gekennzeichnet, dass die Schwellen-Schaltung (46) aus einer Addier-Stufe (45) zum Aufaddieren der Intensitätsabweichungen ($\Delta$I) , ein Register (47) zum Speichern eines Grenzwertes ($I_g$) und einen mit der Addier-Stufe (45) und dem Register (47) verbundenen Vergleicher (48) zur Bildung des Steuersignals ($S_3$) aufweist.

17. Einrichtung nach Anspruch 15 oder 16, dadurch gekennzeichnet, dass die Schwellen-Schaltung (46) abschaltbar ist.

**Revendications**

1. Procédé pour contrôler acoustiquement le réglage d'un faisceau lumineux en ce qui concerne sa répartition d'intensité dans un plan de référence, transversalement par rapport à l'axe optique de ce faisceau lumineux, procédé caractérisé en ce que:
a) le plan de référence (3) est subdivisé en éléments de surface (4) et pour chaque élément de surface (4) une valeur d'intensité souhaitée ($I_s$) est prédéfinie et maintenue,
b) les valeurs d'intensité ($I_i$) du faisceau lumineux (1) respectivement existantes dans les différents éléments de surface (4) lors du réglage sont mesurées selon une succession cyclique rapide,
c) les écarts d'intensité ($\Delta$I) entre les valeurs d'intensité souhaitées et existantes sont déterminés pour les différents éléments de surface (4) et temporairement mémorisés,
d) les écarts d'intensité ($\Delta$I) sont lus l'un après l'autre selon une succession cyclique lente,
e) une vibration est produite, au moins un paramètre de cette vibration est modifié en fonction de l'écart d'intensité ($\Delta$I) respectif dans les différents éléments de surface (4), et la vibration ainsi modifiée est rendue audible en tant que tonalité de mesure correspondante pour chaque élément de surface (4) du plan de référence (3).

2. Procédé selon la revendication 1, caractérisé en ce que, en tant que paramètre, la fréquence, l'amplitude, la fréquence d'impulsions ou le taux d'impulsions de la vibration, fait l'objet d'une modification en fonction des écarts d'intensité ($\Delta$I), et de ce fait, la hauteur de son, l'intensité sonore, la fréquence d'interruption ou la durée d'interruption de la tonalité de mesure se trouve modifiée.

3. Procédé selon la revendication 1 ou 2, caractérisé en ce que les écarts d'intensité ($\Delta$I) sont déterminés sous la forme de valeurs différentielles d'intensité.

4. Procédé selon une des revendications 1 à 3, caractérisé en ce que les valeurs différentielles d'intensité ainsi déterminées sont modifiées selon une fonction prédéfinie.

5. Procédé selon une des revendications 1 à 4, caractérisé en ce que:
a) les écarts d'intensité ($\Delta$I) déterminés ou modifiés dans les différents éléments de surface (4) du plan de référence (3) sont comparés à une valeur-limite prédéfinie ($I_g$), qui représente un écart permis à partir de la répartition d'intensité souhaitée,
b) le franchissement vers le bas de la valeur-limite prédéfinie ($I_g$) par l'ensemble des écarts d'intensité ($\Delta$I) dans les éléments de surface (4) est rendu audible en tant que tonalité de mesure.

6. Procédé selon une des revendications 1 à 4, caractérisé en ce que:
a) dans chaque cycle de mesure, la somme ($\Sigma\Delta$I) de tous les écarts d'intensité est formée et la valeur ($\Sigma\Delta$I) de cette somme est comparée avec une valeur-limite prédéfinie ($I_g$) qui représente un écart permis à partir de la répartition d'intensité souhaitée,
b) le franchissement vers le bas de la valeur-limite prédéfinie ($I_g$) par la valeur ($\Sigma\Delta$I) de la somme est rendu audible en tant que tonalité de mesure.

7. Procédé selon la revendication 5 ou 6, caractérisé en ce que, lors du franchissement vers le bas de la valeur-limite, la tonalité de mesure dépendant des écarts d'intensité ($\Delta$I) est mise hors circuit.

8. Procédé selon une des revendications 1 à 7, caractérisé en ce que:
a) des valeurs d'intensité souhaitées ($I_s$) et la valeur-limite ($I_s$) sont prédéfinies sous la forme de valeurs normalisées,
b) les valeurs d'intensité mesurées ($I_i$) sont normalisées.

9. Procédé selon une des revendications 1 à 8, caractérisé en ce que pour mesurer les valeurs d'intensité ($I_i$) existantes, un faisceau lumineux partiel (1') est réfléchi à partir du faisceau lumineux (1).

10. Installation pur contrôler acoustiquement le réglage d'un faisceau lumineux en ce qui concerne sa répartition d'intensité transversalement par rapport à l'axe optique de ce faisceau lumineux, dans un plan de référence subdivisé en éléments de surface, installation caractérisée en ce qu'elle comporte:
a) un dispositif optique et électronique de mesure (7) pour mesurer les valeurs d'intensité exis-

tantes ($I_i$) dans les éléments de surface du plan de référence,

b) un multiplexeur (9) raccordé au dispositif de mesure (7), pour la transmission cyclique successive des valeurs d'intensité ($I_i$) mesurées,

c) un convertisseur analogique-numérique (11), relié au multiplexeur (9) pour mettre sous forme numérique les valeurs d'intensité ($I_i$),

d) une mémoire de valeurs de consigne (5) pour stocker des valeurs d'intensité prédéfinies ($I_S$) pour les différents éléments de surface du plan de référence,

e) un étage (22) raccordé à la mémoire de valeurs de consigne (5) et au convertisseur analogique-numérique (11), pour déterminer les écarts d'intensité ($\Delta \bar{I}$) entre les valeurs d'intensité prédéfinies et les valeurs d'intensité mesurées ($I_S$; $I_i$) pour les différents éléments de surface,

f) une mémoire-tampon (31) reliée à l'étage (22) pour mémoriser temporairement les écarts d'intensité ($\Delta \bar{I}$) ainsi déterminés,

g) un convertisseur numérique-analogique (39) relié à la mémoire tampon (31) pou obtenir des écarts d'intensité ($\Delta \bar{I}$) sous forme analogique,

h) un générateur de vibrations (40, 42) raccordé au convertisseur numérique-analogique (39) et commandé par les écarts d'intensité ($\Delta \bar{I}$), pour produire une vibration, dont au moins un paramètre sera modifié en fonction des écarts d'intensité ($\Delta I$).

i) un convertisseur électro-acoustique (43) raccordé au générateur de vibrations (40, 42) pour convertir en une tonalité de mesure la vibration ainsi modifiée,

k) un premier générateur de commande (12, 14, 25) relié au multiplexeur (9), à l mémoire de valeurs de consigne (5) et à la mémoire-tampon (31), pour transmettre les valeurs d'intensité ($I_i$) mesurées, pour lire les valeurs d'intensité souhaitées ($I_S$) dans la mémoire de valeurs de consigne (5) et pour inscrire les écarts d'intensité déterminés ($\Delta \bar{I}$) dans la mémoire-tampon (31),

l) un second générateur de commande (34, 36), raccordé à la mémoire-tampon (31) pour lire les écarts d'intensité ($\Delta \bar{I}$) mémorisés temporairement.

11. Installation selon la revendication 10, caractérisée en ce que le générateur de vibrations (40, 42) comporte un oscillateur (40) commandé en tension, grâce auquel la fréquence de la vibration produite est modifiée en fonction des écarts d'intensité ($\Delta \bar{I}$).

12. Installation selon la revendication 10 ou 11, caractérisée en ce que l'étage (22) est un étage différentiel.

13. Installation selon une des revendications 10 à 12, caractérisée en ce qu'un étage (29) pour modifier les écarts d'intensité ($\Delta I$) selon une fonction prédéfinie est branché entre l'étage (22) et la mémoire-tampon (31).

14. Installation selon une des revendications 10 à 13, caractérisée en ce qu'un étage de normalisation (18), pour normaliser les valeurs d'intensité mesurées ($I_i$), est disposé entre le convertisseur analogique-numérique (11) et l'étage (22).

15. Installation selon une des revendications 10 à 14, caractérisée en ce que:

a) il est prévu un circuit à seuil (46) relié à l'étage (22) ou à l'étage (29) et au générateur de vibrations (40, 42) pour produire un signal de commande ($S_3$) lors du fontionnement vers le bas d'une valeur limite prédéfinie ($I_g$) par les écarts d'intensité ($\Delta I$),

b) le générateur de vibrations (40, 42) comporte, en outre, des moyens (49, 50) pour produire une seconde vibration et des moyens de commutation (41) susceptibles d'être actionnés par le signal de commande ($S_3$), pour transmettre la seconde vibration au convertisseur électro-acoustique (43), grâce à quoi, lors du franchissement vers le bas de la valeur limite, une seconde tonalité de mesure est rendue audible,

16. Installation selon la revendication 15, caractérisée en ce que le circuit à seuil (46) comporte un étage de totalisation (45) pour totaliser les écarts d'intensité ($\Delta \bar{I}$), un registre (47) pour mémoriser une valeur limite ($I_g$) et un comparateur (48) relié à l'étage de totalisation (45) et au registre (47) pour former le signal de commande ($S_3$).

17. Installation selon la revendication 15 ou 16, caractérisée en ce que le circuit à seuil (46) peut être déconnecté.

## Claims

1. Method for acoustic verification of the adjustment of a light beam relative to its intensity distribution in a reference plane transverse to the optical axis of the light beam, characterised in that

a) the reference plane (3) is subdivided into surface elements (4) and a desired intensity value ($I_S$) is specified and retained for each surface element (4),

b) The intensity values ($I_i$), existing in each case upon the adjustment, of the light beam (1) in the individual surface elements (4) are measured in rapid cyclical sequence,

c) for the individual surface elements (4) the intensity deviations ($\Delta \bar{I}$) between desired and existing intensity values are determined and intermediately stored,

d) the intensity deviations ($\Delta \bar{I}$) are selected successively in slow cyclical sequence, and

e) an oscillation is generated, at least one parameter of the oscillation is modified as a function of the respective intensity deviation ($\Delta \bar{I}$) in the individual surface elements (4), and the modified oscillation is made audible as corresponding measurement sound for each surface element (4) of the reference plane (3).

2. Method according to claim 1, characterised in that as parameters, the frequency, the amplitude, the keying frequency or the keying ratio of the oscillation is modified as a function of the intensity deviations ($\Delta \bar{I}$), and the pitch, the sound intensity, the interrupter frequency or the interruption duration of the measurement sound is thereby changed.

3. Method according to claim 1 or 2, characterised in that the intensity deviations ($\Delta \bar{I}$) are determined as intensity difference values.

4. Method according to one of claims 1–3, characterised in that the determined intensity difference values are modified in accordance with a specified function.

5. Method according to one of claims 1–4, characterised in that

a) the determined or modified intensity deviations ($\Delta I$) in the individual surface elements (4) of the reference plane (3) are compared with a specified threshold value ($I_g$) which represents an allowed deviation from the desired intensity distribution, and

b) the falling of all the intensity deviations ($\Delta I$) in the surface elements (4) below the specified threshold value ($I_g$) is made audible as measurement sound.

6. Method according to one of claims 1–4, characterised in that

a) in each measuring cycle the sum of all the intensity deviations ($\Sigma \Delta I$) is formed and the summation value ($\Sigma \Delta I$) is compared with a specified threshold value ($I_g$) which represents an allowed deviation from the desired intensity distribution, and

b) the falling of the summation value ($\Sigma \Delta I$) below the specified threshold value ($I_g$) is made audible as measurement sound.

7. Method according to claim 5 or 6, characterised in that upon the fall below the threshold value the measurement sound which is dependent upon the intensity deviations ($\Delta I$) is switched off.

8. Method according to one of claims 1–7, characterised in that

a) desired intensity values ($I_s$) and the threshold value ($I_g$) are specified as standardized values, and

b) the measured intensity values ($I_i$) are standardized.

9. Method according to one of claims 1–8, characterised in that for the measurement of the existing intensity values ($I_i$) a partial light beam (1') is reflected out of the light beam (1).

10. Apparatus for acoustic verification of the adjustment of a light beam relative to its intensity distribution in a reference plane, subdivided into surface elements, transverse to the optical axis of the light beam, characterised by

a) an optoelectronic measuring arrangement (7) for measuring the existing intensity values ($I_i$) in the surface elements of the reference plane,

b) a multiplexer (9) connected to the measuring arrangement (7) for the cyclical consecutive switching of the measured intensity values ($I_i$),

c) an A/D converter (11), connected to the multiplexer (9), for digitalizing the intensity values ($I_i$),

d) a nominal-value store (5) for the storing of specified intensivity values ($I_s$) for the individual surface elements of the reference plane,

e) a stage (22), connected to the nominal-value store (5) and the A/D converter (11), for determining the intensity deviations ($\Delta \bar{I}$) between the specified and the measured intensity values ($I_s$; $I_i$) for the individual surface elements,

f) a buffer store (31), connected to the stage (22), for the intermediate storage of the determined intensity deviations ($\Delta \bar{I}$),

g) a D/A converter (39), in connection with the buffer store (31), for the formation of analog intensity deviations ($\Delta \bar{I}$),

h) an oscillation generator (40, 42), connected to the D/A converter (39) and controlled by the intensity deviations ($\Delta \bar{I}$), for the generation of an oscillation by which at least one parameter is modified as a function of the intensity deviations ($\Delta \bar{I}$),

i) an electroacoustic transducer (43), connected to the oscillation generator (40, 42) for converting the modified oscillation into a measurement sound,

k) a first control generator (12, 14, 25), connected to the multiplexer (9), the nominal-value store (5) and the buffer store (31), for switching the measured intensity values ($I_i$), for selecting the desired intensity values ($I_s$) from the nominal value store (5) and for entering the determined intensity deviations ($\Delta \bar{I}$) into the buffer store (31), and by

l) a second control generator (34, 36), connected to the buffer store (31), for selecting the intermediately-stored intensity deviations ($\Delta \bar{I}$).

11. Apparatus according to claim 10, characterised in that the oscillation generator (40, 42) has a voltage-controlled oscillator (40) with which the frequency of the generated oscillation is modified as a function of the intensity deviations ($\Delta \bar{I}$).

12. Apparatus according to claim 10 or 11, characterised in that the stage (22) is formed as a difference stage.

13. Apparatus according to one of claims 10–12, characterised in that a stage (29) for modifying the intensity deviations ($\Delta \bar{I}$) in accordance with a specified function is connected between the stage (22) and the buffer store (31).

14. Apparatus according to one of claims 10–13, characterised in that a standardizing stage (18) for standardizing the measured intensity values ($I_i$) is arranged between the A/D converter (11) and the stage (22).

15. Apparatus according to one of claims 10–14, characterised in that

a) a treshold circuit (46) connected to the stage (22) or the stage (29) and the oscillation generator (40; 42) is provided, for generating a control signal ($S_3$) when a predetermined threshold value ($I_g$) is fallen below by the intensity deviations ($\Delta \bar{I}$), and

b) the oscillation generator (40, 42) additionally has means (49, 50) for the generation of a second oscillation and switching means (41) actuable by the control signal ($S_3$), for the switching of the second oscillation to the electroacoustic transducer 643), whereby, when the threshold value is fallen below, a second measurement sound becomes audible.

16. Apparatus according to claim 15, characterised in that the threshold circuit (46) has an adding stage (45) for adding up the intensity deviations ($\Delta I$), a register (47) for the storing of a threshold value ($I_g$) and a comparator (48), connected to the adding stage (45) and the register (47), for the formation of the control signal ($S_3$).

17. Apparatus according to claim 15 or 16, characterised in that the threshold circuit (46) can be switched off.

Fig. 1

Fig. 2